(19) Europäisches Patentamt / European Patent Office / Office européen des brevets

(11) EP 3 537 780 A1

(12) **EUROPEAN PATENT APPLICATION**
published in accordance with Art. 153(4) EPC

(43) Date of publication:
11.09.2019 Bulletin 2019/37

(21) Application number: 16922124.9

(22) Date of filing: 24.11.2016

(51) Int Cl.:
*H04W 52/14* (2009.01)

(86) International application number:
PCT/CN2016/107166

(87) International publication number:
WO 2018/094672 (31.05.2018 Gazette 2018/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Huawei Technologies Co., Ltd.
Longgang District
Shenzhen, Guangdong 518129 (CN)

(72) Inventors:
• GUO, Zhiheng
Shenzhen
Guangdong 518129 (CN)
• XIE, Xinqian
Shenzhen
Guangdong 518129 (CN)
• CHENG, Xingqing
Shenzhen
Guangdong 518129 (CN)

(74) Representative: Epping - Hermann - Fischer
Patentanwaltsgesellschaft mbH
Schloßschmidstraße 5
80639 München (DE)

(54) **INFORMATION TRANSMISSION METHOD, BASE STATION AND TERMINAL**

(57) Embodiments of the present invention disclose an information transmission method, a base station, and a terminal, and the information transmission method, the base station, and the terminal are used in a multiuser superposition transmission (MUST) system. The method includes: sending, by a base station, an indication message to a terminal, where the indication message indicates power information for transmitting a data signal by the base station to the terminal, or the indication message indicates a quantity of interference space layers, and the quantity of interference space layers is corresponding to the data signal transmitted by the base station to the terminal; and sending, by the base station, the data signal to the terminal. According to the present invention, reliability of data signal transmission between the base station and the terminal can be improved.

```
┌─────────────────────────────────────────────┐
│ A base station sends an indication message   │  ⟋ S201
│ to a terminal                                │
└─────────────────────────────────────────────┘
                      │
                      ▼
┌─────────────────────────────────────────────┐
│ The base station sends a data signal to the  │  ⟋ S202
│ terminal                                     │
└─────────────────────────────────────────────┘
```

FIG. 2

**Description**

**TECHNICAL FIELD**

The present invention relates to the field of communications technologies, and in particular, to an information transmission method, a base station, and a terminal.

**BACKGROUND**

In a Long Term Evolution (Long Term Evolution, LTE) or Long Term Evolution-Advanced (Long Term Evolution-Advanced, LTE-A) communications system, an orthogonal frequency division multiple access (Orthogonal Frequency Division Multiple Access, OFDMA) manner is usually used as a downlink multiple access manner. A main feature of the orthogonal frequency division multiple access manner is as follows: Different users use different time-frequency resources, to ensure that no interference exists between signals received by different users, and further implement simple reception on a user side. However, when the orthogonal frequency division multiple access manner is used for communication, utilization of a time-frequency resource is relatively low, and consequently an overall transmission rate of the communications system is limited. In a non-orthogonal multiple access (Non-orthogonal Multiple Access, NOMA) transmission manner, information of a plurality of users can be transmitted on a single resource element. Compared with OFDMA, NOMA improves the overall transmission rate of the system. Further, in a semi-orthogonal multiple access (Semi-orthogonal Multiple Access, SOMA) transmission manner, a Gray code characteristic of an existing modulation scheme (a constellation diagram) is used, so that a receiver of a terminal can use a simple reception algorithm, to further improve system performance. Some downlink transmission solutions, including NOMA and SOMA, are also collectively referred to as multiuser superposition transmission (Multiuser Superposition Transmission, MUST). During MUST communication in the LTE or LTE-A system, two or more users are allowed to be paired, to transmit information on a same time-frequency resource. When two users are paired with each other, the two users may perform transmission by using different powers or different quantities of transport layers. Usually, a user whose downlink transmit power is relatively high is referred to as a far user, and a user whose downlink transmit power is relatively low is referred to as a near user.

In the prior art, a base station notifies a user whether MUST interference exists at a space layer used by a terminal of the user, and notifies the user of a signal power ratio value of a far user and a signal power ratio value of a near user when MUST interference exists. However, because a quantity of space layers used by a terminal of the far user that is paired with the near user is variable, a terminal of the near user cannot learn of an accurate power of the terminal of the near user. When the near user uses a single-layer spatial multiplexing transmission mode, for example, a transmission mode 4 in which a rank is 1 in LTE, where the transmission mode may be denoted as TM4 rank 1, and when the far user uses a two-layer spatial multiplexing transmission mode, for example, a transmission mode 4 in which a rank is 2 in LTE, where the transmission mode is denoted as TM4 rank 2, a space layer of the near user is paired with one of two space layers of the far user. P is denoted as a total power of the far user and the near user, and a is denoted as an allotment of a power of the near user at paired space layers. In this case, the power of the near user is P*a/2. However, when the near user uses TM4 rank 1 and the far user uses TM4 rank 1, a power of the near user is P*a. It should be noted that, in a MUST transmission mode, the base station simultaneously sends a superposed data signal to a far terminal (the terminal of the far user) and a near terminal (the terminal of the near user) that are paired. For the near terminal, information about the far terminal exists in the data signal that is transmitted by the base station and that is received by the near terminal, and the information causes interference to demodulation performed by the near terminal on information about the near terminal. Therefore, the near terminal considers the information about the far terminal in the received data signal as interference, and therefore considers a quantity of space layers of the far terminal as a quantity of interference space layers. It can be learned that, in the foregoing two cases, the power of the near user has different values, and consequently the near user cannot learn of an accurate power of the near user. This affects reliability of data signal transmission.

**SUMMARY**

Embodiments of the present invention provide an information transmission method, a base station, and a terminal, to improve reliability of data signal transmission.

A first aspect of the embodiments of the present invention provides an information transmission method, where the method is used in a multiuser superposition transmission (MUST) system, and may include:

sending, by a base station, an indication message to a terminal, where the indication message indicates power information for transmitting a data signal by the base station to the terminal, or the indication message indicates a quantity of interference space layers, and the quantity of interference space layers is corresponding to the data signal transmitted by the base station to the terminal; and

sending, by the base station, the data signal to the terminal.

In a possible implementation, the indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer. In a possible implementation, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

In a possible implementation, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

In a possible implementation, the indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

In a possible implementation, the power information includes a power offset amount, or includes whether power offset is performed and a power offset amount, and the power offset amount is 0 or a preset value.

In a possible implementation, when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

A second aspect of the embodiments of the present invention provides an information transmission method, where the method may include:

receiving, by a terminal, an indication message sent by a base station, where the indication message indicates power information for transmitting a data signal by the base station to the terminal, or the indication message indicates a quantity of interference space layers, and the quantity of interference space layers is corresponding to the data signal transmitted by the base station to the terminal;

calculating, based on the indication message, a power for receiving the data signal; and

receiving, based on the calculated power, the data signal sent by the base station.

In a possible implementation, the indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer. In a possible implementation, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

In a possible implementation, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

In a possible implementation, the indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

In a possible implementation, the power information includes a power offset amount, or includes whether power offset is performed and a power offset amount, and the power offset amount is 0 or a preset value.

In a possible implementation, when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

A third aspect of the embodiments of the present invention provides a base station, where the base station may include:

a first sending unit, configured to send an indication message to a terminal, where the indication message indicates power information for transmitting a data signal by the base station to the terminal, or the indication message indicates a quantity of interference space layers, and the quantity of interference space layers is corresponding to the data signal transmitted by the base station to the terminal; and

a second sending unit, configured to send the data signal to the terminal.

In a possible implementation, the indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer. In a possible implementation, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

In a possible implementation, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

In a possible implementation, the indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

In a possible implementation, the power information includes a power offset amount, or includes whether power offset is performed and a power offset amount, and the power offset amount is 0 or a preset value.

In a possible implementation, when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

A fourth aspect of the embodiments of the present invention provides a base station, where the base station may include:

a transceiver and a processor, where

the processor is configured to control the transceiver to send/receive information; and the transceiver is configured to: send an indication message to a terminal, where the indication message indicates power information for transmitting a data signal by the base station to the terminal, or the indication message indicates a quantity of interference space layers, and the quantity of interference space layers is corresponding to the data signal transmitted by the base station to the terminal; and send the data signal to the terminal.

In a possible implementation, the indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer. In a possible implementation, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

In a possible implementation, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

In a possible implementation, the indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

In a possible implementation, the power information includes a power offset amount, or includes whether power offset is performed and a power offset amount, and the power offset amount is 0 or a preset value.

In a possible implementation, when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

A fifth aspect of the embodiments of the present invention provides a computer program product, where the computer program product may include a computer readable medium, and the computer readable medium includes a set of program code, and is configured to perform the method according to any one of the first aspect or the implemntaions of the first aspect of the embodiments of the present invention.

A sixth aspect of the embodiments of the present invention provides a terminal, where the terminal may include:

a first receiving unit, configured to receive an indication message sent by a base station, where the indication message indicates power information for transmitting a data signal by the base station to the terminal, or the indication message indicates a quantity of interference space layers, and the quantity of interference space layers is corresponding to the data signal transmitted by the base station to the terminal;

a calculation unit, configured to calculate, based on the indication message, a power for receiving the data signal; and

a second receiving unit, configured to receive, based on the calculated power, the data signal sent by the base station.

In a possible implementation, the indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer. In a possible implementation, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

In a possible implementation, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

In a possible implementation, the indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

In a possible implementation, the power information includes a power offset amount, or includes whether power offset is performed and a power offset amount, and the power offset amount is 0 or a preset value.

In a possible implementation, when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

A seventh aspect of the embodiments of the present invention provides a terminal, where the terminal may include:

a processor and a transceiver, where
the transceiver is configured to receive an indication message sent by a base station, where the indication message indicates power information for transmitting a data signal by the base station to the terminal, or the indication message indicates a quantity of interference space layers, and the quantity of interference space layers is corresponding to the data signal transmitted by the base station to the terminal;
the processor is configured to calculate, based on the indication message, a power for receiving the data signal; and
the transceiver is further configured to receive, based on the calculated power, the data signal sent by the base station.

In a possible implementation, the indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer. In a possible implementation, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

In a possible implementation, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

In a possible implementation, the indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

In a possible implementation, the power information includes a power offset amount, or includes whether power offset is performed and a power offset amount, and the power offset amount is 0 or a preset value.

In a possible implementation, when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid. An eighth aspect of the embodiments of the present invention provides a computer program product, where the computer program product may include a computer readable medium, and the computer readable medium includes a set of program code, and is configured to perform the method according to any one of the first aspect or the implemntaions of the second aspectof the embodiments of the present invention.

## BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other accompanying drawings from these accompanying drawings without creative efforts.

FIG. 1 is a schematic architectural diagram of a MUST system according to an embodiment of the present invention;
FIG. 2 is a schematic flowchart of an information transmission method according to an embodiment of the present invention;
FIG. 3 is a schematic flowchart of another information transmission method according to an embodiment of the present invention;
FIG. 4 is a schematic composition diagram of a base station according to an embodiment of the present invention;
FIG. 5 is a schematic composition diagram of another base station according to an embodiment of the present invention;
FIG. 6 is a schematic composition diagram of a terminal according to an embodiment of the present invention; and
FIG. 7 is a schematic composition diagram of another terminal according to an embodiment of the present invention.

## DESCRIPTION OF EMBODIMENTS

In the specification, claims, and accompanying drawings of the present invention, the terms "first", "second", "third", and the like are intended to distinguish between different objects but do not describe a particular order. In addition, the terms "include", "have", and any other variant thereof are intended to cover a non-exclusive inclusion. For example, a process, a method, a system, a product, or an apparatus that includes a series of steps or units is not limited to the listed steps or units, but optionally further includes an unlisted step or unit, or optionally further includes another step or unit inherent to the process, the method, the product, or the apparatus.

To meet rapidly increased communication requirements of a user, in a current mobile communications technology and a subsequent communications technology, utilization of a time-frequency resource needs to be improved, thereby improving an overall transmission rate of an entire communications system. In this case, two or more users can be paired, and the paired users can transmit information on a same time-frequency resource, to improve resource utilization and system performance.

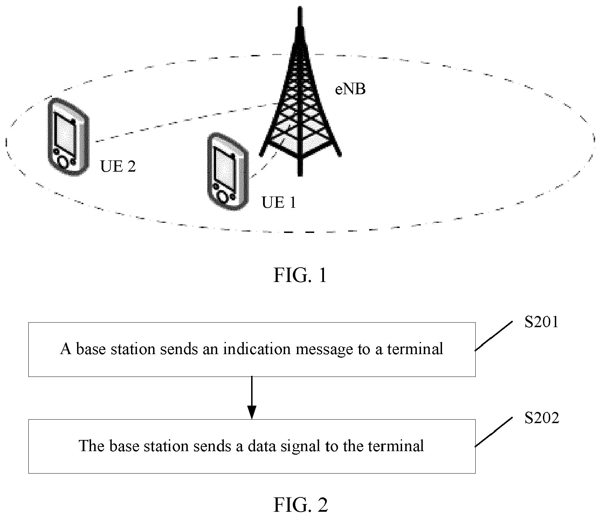

FIG. 1 is a schematic architectural diagram of a MUST system according to an embodiment of the present invention. It should be noted that the MUST system is merely used as an example for description, and an application scope of the present invention is not limited thereto.

The MUST system shown in FIG. 1 includes a base station and two terminals. The base station may deliver a signaling message and send a downlink data signal to the terminal. The base station may include but is not limited to an evolved NodeB (evolved NodeB, eNB), a NodeB (NodeB, NB), a base station controller (Base Station Controller, BSC), a base transceiver station (Base Transceiver Station, BTS), a home base station (for example, a home evolved NodeB or a home NodeB, HNB), or the like.

User equipment (User Equipment, UE) may also be referred to as a terminal, is a device that provides a user with voice and/or data connectivity, and may include but is not limited to a smartphone (for example, an Android mobile phone, an iOS mobile phone, or a Windows Phone mobile phone), a tablet computer, a palmtop computer, a notebook computer, a mobile Internet device (Mobile Internet Device, MID), a wearable device, or the like. The foregoing terminals are merely examples that are not exhaustive, and the user equipment includes but is not limited to the foregoing terminals.

A terminal 1 and a terminal 2 in FIG. 1 may perform data transmission with the base station by using a multiuser superposition transmission (MUST) method. The two terminals may perform transmission by using different powers or different quantities of transport layers. Usually, a user whose downlink transmit power is relatively high is referred to as a far user, and a user whose downlink transmit power is relatively low is referred to as a near user. For example, in FIG. 1, the terminal 2 may be a terminal of a far user, and the terminal 1 may be a terminal of a near user. Because the users use different quantities of transport layers, the terminal of the near user cannot accurately learn of a power of the terminal of the near user, and consequently reliability of data signal transmission is affected. Therefore, a method needs to be provided to prompt the terminal, so that the terminal can learn of an accurate power.

The following describes the method and the device in the embodiments of the present invention with reference to FIG. 2 to FIG. 7.

FIG. 2 is a schematic flowchart of an embodiment of an information transmission method. In this embodiment, the method is used in a MUST system, and specifically includes the following steps. S201. A base station sends an indication message to a terminal.

The indication message indicates power information for transmitting a data signal by the base station to the terminal, or the indication message indicates a quantity of interference space layers, and the quantity of interference space layers is corresponding to the data signal transmitted by the base station to the terminal.

S202. The base station sends a data signal to the terminal.

In step S201, optionally, the power information includes a power offset amount, or includes whether power offset is performed and a power offset amount, the power offset amount is 0 or a preset value, and the quantity of interference signal space layers is corresponding to the power offset amount.

The preset value may be preset by the system, for example, may be set to -10lg2, or may be notified in advance by the base station to the terminal.

Optionally, if the power information includes the power offset amount, the power information may indicate a specific value, for example, 0 or -lg2.

If the power information includes whether power offset is performed and the power offset amount, the power information may indicate whether offset is performed, and indicate a specific offset value, for example, -10lg2. Certainly, herein, the base station may alternatively notify the terminal in advance of a specific power offset amount, and then the power information directly indicates whether offset is performed.

When the base station indicates that the power offset amount is -10lg2 dB, the terminal may reduce, by 10lg2 dB, a power value obtained through calculation when the power offset amount is 0, to obtain a value, and use the value as a power value of the terminal.

Optionally, the indication message may be used to indicate a quantity of interference signal space layers or a quantity of interference user space layers in a MUST transmission mode to the user terminal. A quantity of interference layers is uniformly used for description in the following content. When the user terminal performs single-layer transmission and the indication message indicates that there is one interference layer, the user terminal does not adjust a power during power calculation; or when the user terminal performs single-layer transmission and the indication message indicates that there are two interference layers, the user terminal adjusts a power during power calculation, and a power adjustment amount may be corresponding to the preset value, for example, may be -10lg2.

Optionally, before step S201, the base station may correspondingly configure the indication message. The indication message may be composed in the following several manners. (1) The indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer.

Optionally, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

Optionally, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

For example, in a possible implementation, the indication message is a 1-bit field, the field includes two states, and indication meanings of the states are shown in Table 1.

**Table 1**

| Value corresponding to the bit | Downlink power offset [dB] |
|---|---|
| 0 | -X |
| 1 | 0 |

A value of X may be 10lg2, or may be another value. A specific value of X may be a parameter that is preset by the system, or may be a parameter that is preconfigured by the base station for the user terminal.

In another possible implementation, the indication message is a 2-bit field, the field includes two states, and indication meanings of the states are shown in Table 2 or Table 3.

**Table 2**

| Value corresponding to the bits | Indication meaning |
|---|---|
| 0 | Power offset 0 dB (No power offset is performed) |
| 1 | Power offset - 10lg2 dB |
| 2 | Reserved |

(continued)

| Value corresponding to the bits | Indication meaning |
|---|---|
| 3 | Reserved |

**Table 3**

| Value corresponding to the bits | Indication meaning |
|---|---|
| 0 | Power offset 0 dB (No power offset is performed) |
| 1 | Power offset 0 dB (No power offset is performed) |
| 2 | Power offset -10lg2 dB |
| 3 | Power offset - 10lg2 dB |

In another possible implementation, the indication message is a 2-bit field. When the base station performs transmission with the terminal by using a single space layer or a single codeword, an indication meaning of the field is shown in Table 2 or Table 3; or when the user performs transmission by using two space layers or two codewords, the field is used to indicate an interference existence status and a power ratio at a corresponding space layer to the user. Therefore, use of a field in a single-codeword case is added to use of the field in an existing indication method. Details are shown in Table 4.

**Table 4**

| Single codeword | | Two codewords | |
|---|---|---|---|
| Value corresponding to the bits | Indication meaning | Value corresponding to the bits | Indication meaning |
| 0 | Power offset 0 dB (No power offset is performed) | 0 | Unpaired transmission |
| 1 | Power offset - 10lg2 dB | 1 | Zeroth power ratio value |
| 2 | Reserved | 2 | First power ratio value |
| 3 | Reserved | 3 | Second power ratio value |

In the single-codeword case in the foregoing table, it may be understood that a second bit in the field that includes 2 bits is used to indicate the power information, and a first bit is reserved; or similarly, a first bit in the field that includes 2 bits is used to indicate the power information, and a second bit is reserved. (2) The indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data signal by the base station to the terminal.

The foregoing composition manner of the indication message is applicable to a case in which the indication message includes the first field and the second field, and the terminal transmits the data signal by using only one space layer. For example, the first field and the second field each include 2 bits, and indication content of the first field and indication content of the second field are described in Table 5. When the terminal transmits the data signal by using one space layer, the first field may be used, as in the prior art, to indicate a MUST interference existence status and a power ratio at this space layer, and the second field is used to indicate the power information for transmitting the data signal by the base station to the terminal; or the first field and the second field are interchanged. In addition, when the first field indicates unpaired transmission, in other words, when no terminal of a far user is paired with the terminal, a state indicated by the second field is invalid, in other words, the terminal does not interpret the second field; or a state indicated by the second field is that a downlink power offset amount is 0 dB (or no power offset is performed), in other words, the second field fixedly indicates a state 0.

**Table 5**

| First field | |
| --- | --- |
| Value corresponding to the bits | Indication meaning |
| 0 | Unpaired transmission |
| 1 | Zeroth power ratio value |
| 2 | First power ratio value |
| 3 | Second power ratio value |
| | |
| Second field | |
| Value corresponding to the bits | Indication meaning |
| 0 | Power offset 0 dB (No power offset is performed) |
| 1 | Power offset - 10lg2 dB |
| 2 | Reserved |
| 3 | Reserved |

Indication content of the first field and indication content of the second field may alternatively be described in Table 6. When the second field indicates unpaired transmission, a state indicated by the first field is invalid, or a state indicated by the first field is that a downlink power offset amount is 0 dB (or no power offset is performed).

**Table 6**

| First field | |
| --- | --- |
| Value corresponding to the bits | Indication meaning |
| 0 | Power offset 0 dB (No power offset is performed) |
| 1 | Power offset - 10lg2 dB |
| 2 | Reserved |
| 3 | Reserved |
| | |
| Second field | |
| Value corresponding to the bits | Indication meaning |
| 0 | Unpaired transmission |
| 1 | Zeroth power ratio value |
| 2 | First power ratio value |
| 3 | Second power ratio value |

It should be noted that a quantity of bits included in the first field and a quantity of bits included in the second field each are not limited to 1 bit or 2 bits, a correspondence between a state corresponding to indicated downlink power information and each of a value of the first field and a value of the second field is also not limited to the correspondences shown in the foregoing tables, and the correspondence is not limited to a one-to-one relationship, and may be a one-to-multiple relationship, a multiple-to-one relationship, or a multiple-to-multiple relationship.

It should be noted that, when the indication message includes information about the quantity of interference space layers, the state indicated by the first field or the state indicated by the second field includes at least one of an indication that there is one interference space layer, or an indication that there are two interference space layers. Details may be shown in Table 7 and may be similar to the content described in Table 1, Table 2, Table 3, Table 4, Table 5, or Table 6, where power offset information is replaced with the information about the quantity of interference space layers. For example, the description "power offset 0 dB (no power offset is performed)" in the tables may be replaced with "there is one interference space layer", and "power offset -10lg2 dB" may be replaced with "there are two interference space layers". A correspondence between a state corresponding to indicated downlink power offset information and a value of the first field or a value of the second field is also not limited to the correspondences shown in these tables, and the correspondence is not limited to a one-to-one relationship, and may be a one-to-multiple relationship, a multiple-to-one relationship, or a multiple-to-multiple relationship.

**Table 7**

| Value corresponding to the bits | Indication meaning |
|---|---|
| 0 | There is one interference space layer |
| 1 | There are two interference space layers |
| 2 | Reserved |
| 3 | Reserved |

After configuring the indication message, the base station may send the indication message to the terminal, so that the terminal calculates, based on the indication message, a power for receiving the data signal. Then, the base station sends the data signal to the terminal, to complete high-quality data transmission.

It should be noted that the power information indicated in the indication message may be $\delta_{\text{power-offset}}$ defined in the prior art, or may be a newly defined parameter $\delta_{\text{power-offset}}^{\text{must}}$. This is not limited in this embodiment of the present invention.

In this embodiment, the base station sends the indication message to the terminal, and adds, to the indication message, the power information or the quantity of interference signal space layers when the base station transmits the data signal to the terminal, so that the terminal can calculate and obtain, based on the information, an accurate power for receiving the data signal, to improve reliability of data signal transmission.

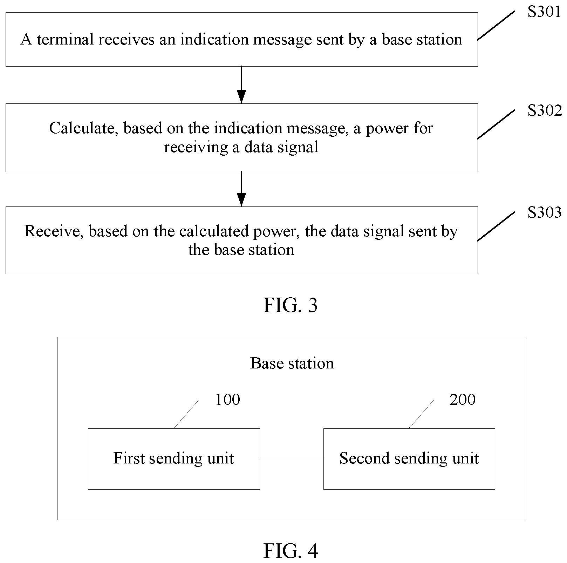

FIG. 3 is a schematic flowchart of an embodiment of a method. In this embodiment, the method is used in a MUST system, and specifically includes the following steps.

S301. A terminal receives an indication message sent by a base station.

The indication message indicates power information for transmitting a data signal by the base station to the terminal, or the indication message indicates a quantity of interference space layers, and the quantity of interference space layers is corresponding to the data signal transmitted by the base station to the terminal.

Optionally, the power information includes a power offset amount, or includes whether power offset is performed and a power offset amount, the power offset amount is 0 or a preset value, and the quantity of interference signal space layers is corresponding to the power offset amount.

The preset value may be preset by the system, for example, may be set to -10lg2, or may be notified in advance by the base station to the terminal.

Optionally, if the power information includes the power offset amount, the power information may indicate a specific value, for example, 0 or -lg2.

If the power information includes whether power offset is performed and the power offset amount, the power information may indicate whether offset is performed, and indicate a specific offset value, for example, -10lg2. Certainly, herein, the base station may alternatively notify the terminal in advance of a specific power offset amount, and then the power information directly indicates whether offset is performed.

When the base station indicates that the power offset amount is -10lg2 dB, the terminal may reduce, by 10lg2 dB, a power value obtained through calculation when the power offset amount is 0, to obtain a value, and use the value as a power value of the terminal.

Optionally, the indication message may be used to indicate a quantity of interference signal space layers or a quantity of interference user space layers in a MUST transmission mode to the user terminal. A quantity of interference layers is uniformly used for description in the following content. When the user terminal performs single-layer transmission and the indication message indicates that there is one interference layer, the user terminal does not adjust a power during power calculation; or when the user terminal performs single-layer transmission and the indication message indicates that there are two interference layers, the user terminal adjusts a power during power calculation, and a power adjustment amount may be corresponding to the preset value, for example, may be -10lg2.

Optionally, the base station may correspondingly configure the indication message. The indication message may be composed in the following several manners. (1) The indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer.

Optionally, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

Optionally, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

For example, in a possible implementation, the indication message is a 1-bit field, the field includes two states, and indication meanings of the states are shown in Table 1.

**Table 1**

| Value corresponding to the bit | Downlink power offset [dB] |
| --- | --- |
| 0 | -X |
| 1 | 0 |

A value of X may be 10lg2, or may be another value. A specific value of X may be a parameter that is preset by the system, or may be a parameter that is preconfigured by the base station for the user terminal.

In another possible implementation, the indication message is a 2-bit field, the field includes two states, and indication meanings of the states are shown in Table 2 or Table 3.

**Table 2**

| Value corresponding to the bits | Indication meaning |
| --- | --- |
| 0 | Power offset 0 dB (No power offset is performed) |
| 1 | Power offset - 10lg2 dB |
| 2 | Reserved |
| 3 | Reserved |

**Table 3**

| Value corresponding to the bits | Indication meaning |
| --- | --- |
| 0 | Power offset 0 dB (No power offset is performed) |
| 1 | Power offset 0 dB (No power offset is performed) |
| 2 | Power offset -10lg2 dB |
| 3 | Power offset - 10lg2 dB |

In another possible implementation, the indication message is a 2-bit field. When the base station performs transmission with the terminal by using a single space layer or a single codeword, an indication meaning of the field is shown in Table 2 or Table 3; or when the user performs transmission by using two space layers or two codewords, the field is used to indicate an interference existence status and a power ratio at a corresponding space layer to the user.

Therefore, use of a field in a single-codeword case is added to use of the field in an existing indication method. Details are shown in Table 4.

**Table 4**

| Single codeword | | Two codewords | |
|---|---|---|---|
| Value correspondin g to the bits | Indication meaning | Value correspondin g to the bits | Indication meaning |
| 0 | Power offset 0 dB (No power offset is performed) | 0 | Unpaired transmission |
| 1 | Power offset - 10lg2 dB | 1 | Zeroth power ratio value |
| 2 | Reserved | 2 | First power ratio value |
| 3 | Reserved | 3 | Second power ratio value |

In the single-codeword case in the foregoing table, it may be understood that a second bit in the field that includes 2 bits is used to indicate the power information, and a first bit is reserved; or similarly, a first bit in the field that includes 2 bits is used to indicate the power information, and a second bit is reserved. (2) The indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data signal by the base station to the terminal.

The foregoing composition manner of the indication message is applicable to a case in which the indication message includes the first field and the second field, and the terminal transmits the data signal by using only one space layer. For example, the first field and the second field each include 2 bits, and indication content of the first field and indication content of the second field are described in Table 5. When the terminal transmits the data signal by using one space layer, the first field may be used, as in the prior art, to indicate a MUST interference existence status and a power ratio at this space layer, and the second field is used to indicate the power information for transmitting the data signal by the base station to the terminal; or the first field and the second field are interchanged. In addition, when the first field indicates unpaired transmission, in other words, when no terminal of a far user is paired with the terminal, a state indicated by the second field is invalid, in other words, the terminal does not interpret the second field; or a state indicated by the second field is that a downlink power offset amount is 0 dB (or no power offset is performed), in other words, the second field fixedly indicates a state 0.

**Table 5**

| First field | |
|---|---|
| Value corresponding to the bits | Indication meaning |
| 0 | Unpaired transmission |
| 1 | Zeroth power ratio value |
| 2 | First power ratio value |
| 3 | Second power ratio value |
| Second field | |
| Value corresponding to the bits | Indication meaning |
| 0 | Power offset 0 dB (No power offset is performed) |
| 1 | Power offset - 10lg2 dB |
| 2 | Reserved |
| 3 | Reserved |

Indication content of the first field and indication content of the second field may alternatively be described in Table 6. When the second field indicates unpaired transmission, a state indicated by the first field is invalid, or a state indicated by the first field is that a downlink power offset amount is 0 dB (or no power offset is performed).

**Table 6**

| First field | |
| --- | --- |
| Value corresponding to the bits | Indication meaning |
| 0 | Power offset 0 dB (No power offset is performed) |
| 1 | Power offset - 10lg2 dB |
| 2 | Reserved |
| 3 | Reserved |
| | |
| Second field | |
| Value corresponding to the bits | Indication meaning |
| 0 | Unpaired transmission |
| 1 | Zeroth power ratio value |
| 2 | First power ratio value |
| 3 | Second power ratio value |

It should be noted that a quantity of bits included in the first field and a quantity of bits included in the second field each are not limited to 1 bit or 2 bits, a correspondence between a state corresponding to indicated downlink power information and each of a value of the first field and a value of the second field is also not limited to the correspondences shown in the foregoing tables, and the correspondence is not limited to a one-to-one relationship, and may be a one-to-multiple relationship, a multiple-to-one relationship, or a multiple-to-multiple relationship.

It should be noted that, when the indication message includes information about the quantity of interference space layers, the state indicated by the first field or the state indicated by the second field includes at least one of an indication that there is one interference space layer, or an indication that there are two interference space layers. Details may be shown in Table 7 and may be similar to the content described in Table 1, Table 2, Table 3, Table 4, Table 5, or Table 6, where power offset information is replaced with the information about the quantity of interference space layers. For example, the description "power offset 0 dB (no power offset is performed)" in the tables may be replaced with "there is one interference space layer", and "power offset -10lg2 dB" may be replaced with "there are two interference space layers". A correspondence between a state corresponding to indicated downlink power offset information and a value of the first field or a value of the second field is also not limited to the correspondences shown in these tables, and the correspondence is not limited to a one-to-one relationship, and may be a one-to-multiple relationship, a multiple-to-one relationship, or a multiple-to-multiple relationship.

**Table 7**

| Value corresponding to the bits | Indication meaning |
| --- | --- |
| 0 | There is one interference space layer |
| 1 | There are two interference space layers |
| 2 | Reserved |
| 3 | Reserved |

After configuring the indication message, the base station may send the indication message to the terminal, so that the terminal calculates, based on the indication message, a power for receiving the data signal. Then, the base station sends the data signal to the terminal, to complete high-quality data transmission.

It should be noted that the power information indicated in the indication message may be $\delta_{\text{power-offset}}$ defined in the prior art, or may be a newly defined parameter $\delta_{\text{power-offset}}^{\text{must}}$. This is not limited in this embodiment of the present invention.

S302. Calculate, based on the indication message, a power for receiving the data signal.

S303. Receive, based on the calculated power, the data signal sent by the base station.

FIG. 4 is a schematic composition diagram of an embodiment of a base station. In this embodiment, the base station includes:

a first sending unit 100, configured to send an indication message to a terminal, where the indication message indicates power information for transmitting a data signal by the base station to the terminal, or the indication message indicates a quantity of interference space layers, and the quantity of interference space layers is corresponding to the data signal transmitted by the base station to the terminal; and

a second sending unit 200, configured to send the data signal to the terminal.

In a possible implementation, the indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer. In a possible implementation, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

In a possible implementation, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

In a possible implementation, the indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

In a possible implementation, the power information includes a power offset amount, or includes whether power offset is performed and a power offset amount, and the power offset amount is 0 or a preset value.

In a possible implementation, when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

It should be noted that the first sending unit 100 and the second sending unit 200 may exist independently, or may be disposed in an integrated manner. In addition, in the embodiment of the base station, the first sending unit 100 or the second sending unit 200 may be disposed independently of a processor of the base station in a form of hardware, and may be disposed in a form of a microprocessor; or may be built in a processor of the base station in a form of hardware; or may be stored in a memory of the base station in a form of software, so that the processor of the base station calls and performs operations corresponding to the first sending unit 100 and the second sending unit 200.

The first sending unit 100 and the second sending unit 200 may be disposed in an integrated manner, or may be disposed independently, or may be disposed independently or disposed in an integrated manner as a transceiver of the base station.

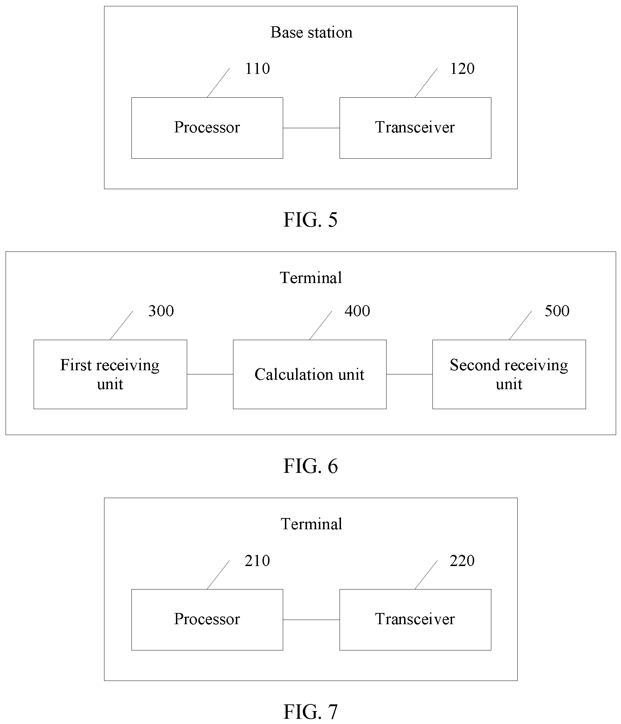

Optionally, as shown in FIG. 5, in another embodiment of the present invention, a base station includes:

a processor 110 and a transceiver 120.

The processor 110 is configured to control the transceiver 120 to send/receive information.

The transceiver 120 is configured to: send an indication message to a terminal, where the indication message indicates power information for transmitting a data signal by the base station to the terminal, or the indication message indicates a quantity of interference space layers, and the quantity of interference space layers is corresponding to the data signal transmitted by the base station to the terminal; and send the data signal to the terminal.

In a possible implementation, the indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer. In a possible implementation, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

In a possible implementation, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

In a possible implementation, the indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

In a possible implementation, the power information includes a power offset amount, or includes whether power offset is performed and a power offset amount, and the power offset amount is 0 or a preset value.

In a possible implementation, when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

FIG. 6 is a schematic composition diagram of an embodiment of a terminal according to the present invention. In this embodiment, the terminal includes:

a first receiving unit 300, configured to receive an indication message sent by a base station, where the indication message indicates power information for transmitting a data signal by the base station to the terminal, or the indication message indicates a quantity of interference space layers, and the quantity of interference space layers is corresponding to the data signal transmitted by the base station to the terminal;

a calculation unit 400, configured to calculate, based on the indication message, a power for receiving the data signal; and

a second receiving unit 500, configured to receive, based on the calculated power, the data information sent by the base station.

In a possible implementation, the indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer. In a possible implementation, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

In a possible implementation, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

In a possible implementation, the indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

In a possible implementation, the power information includes a power offset amount, or includes whether power offset is performed and a power offset amount, and the power offset amount is 0 or a preset value.

In a possible implementation, when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

FIG. 7 is a schematic composition diagram of another embodiment of a terminal according to the present invention. In this embodiment, the terminal includes:

a processor 210 and a transceiver 220.

The transceiver 220 is configured to receive an indication message sent by a base station, where the indication message indicates power information for transmitting a data signal by the base station to the terminal, or the indication message indicates a quantity of interference space layers, and the quantity of interference space layers is corresponding to the data signal transmitted by the base station to the terminal.

The processor 210 is configured to calculate, based on the indication message, a power for receiving the data signal.

The transceiver 220 is further configured to receive, based on the calculated power, the data signal sent by the base station.

In a possible implementation, the indication message includes a first field, and the first field is used to indicate the power information for transmitting the data signal by the base station to the terminal, or the first field is used to indicate a MUST interference existence status and a power ratio when the base station transmits the data signal to the terminal at a corresponding space layer. In a possible implementation, when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

In a possible implementation, when the base station transmits the data signal to the terminal in a single-space-layer transmission mode, the first field is used to indicate the power information for transmitting the data signal by the base station to the terminal; or

when the base station transmits the data signal to the terminal in a two-space-layer transmission mode, the first field is used to indicate the MUST interference existence status and the power ratio at the corresponding space layer.

In a possible implementation, the indication message includes a first field and a second field, where the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

In a possible implementation, the power information includes a power offset amount, or includes whether power offset is performed and a power offset amount, and the power offset amount is 0 or a preset value.

In a possible implementation, when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

The base station described in the embodiments may be configured to implement some or all procedures in the method embodiment described in the present invention with reference to FIG. 2, and perform some or all functions in the apparatus embodiment described in the present invention with reference to FIG. 5. The terminal described in the embodiments may be configured to implement some or all procedures in the method embodiment described in the present invention with reference to FIG. 3, and perform some or all functions in the apparatus embodiment described in the present invention with reference to FIG. 6. Details are not described herein.

In one or more embodiments, the described functions may be implemented by hardware, software, firmware, or any combination thereof. If the functions are implemented by software, the functions may be stored in a computer readable medium as one or more instructions or code, or sent by using a computer readable medium; and are executed by a hardware-based processing unit. The computer readable medium may include a computer readable storage medium (which is corresponding to a tangible medium such as a data storage medium) or a communications medium. The communications medium includes, (for example), any medium that facilitates transmission of a computer program from a place to another place according to a communications protocol. In this manner, the computer readable medium may be generally corresponding to: (1) a non-transitory tangible computer readable storage medium, or (2) a communications medium such as a signal or a carrier. The data storage medium may be any available medium that is accessible to one or more computers or one or more processors to retrieve an instruction, code, and/or a data structure for implementing the technologies described in the present invention. A computer program product may include a computer readable medium.

By way of example but not limitation, some computer readable storage media may include a RAM, a ROM, an EEPROM, a CD-ROM or another optical disc storage, a magnetic disk storage or another magnetic storage apparatus, a flash memory, or any other medium that can store required program code in a form of an instruction or a data structure and that is accessible to a computer. In addition, any connection may be appropriately referred to as a computer readable medium. For example, if an instruction is sent from a website, a server, or another remote source by using a coaxial cable, an optical cable, a twisted pair, a digital subscriber line (DSL), or a wireless (for example, infrared, radio, or microwave) technology, the coaxial cable, the optical cable, the twisted pair, the DSL, or the wireless (for example, infrared, radio, or microwave) technology is included in a definition of a medium. However, it should be understood that the computer readable storage medium and the data storage medium do not include a connection, a carrier, a signal, or another transitory medium, but are non-transitory tangible storage media. As used in this specification, a magnetic disk and an optical disc include a compact disc (CD), a laser disc, an optical disc, a digital versatile disc (DVD), a floppy disk, and a Blu-ray disc. The magnetic disk usually magnetically copies data, and the optical disc optically copies data by using a laser. A combination of the foregoing objects shall further be included in the scope of the computer readable medium. An instruction may be executed by one or more processors such as one or more digital signal processors (DSP), general purpose microprocessors, application-specific integrated circuits (ASIC), field programmable gate arrays (FPGA), or other equivalent integrated circuits or discrete logic circuits. Therefore, the term "processor" used in this specification may indicate the foregoing structure, or any other structure that is applicable to implementation of the technologies described in this specification. In addition, in some aspects, the functions described in this specification may be provided in a dedicated hardware and/or software module configured for encoding and decoding, or may be incorporated into a combined coder-decoder. In addition, the technologies may be completely implemented in one or more circuits or logic elements.

The technologies in the present invention may be widely implemented by a plurality of apparatuses or devices. The apparatuses or devices include a radio handset, an integrated circuit (IC), or an IC set (for example, a chip set). In the present invention, various components, modules, and units are described to emphasize functions of an apparatus that is configured to implement the disclosed technologies, but the functions unnecessarily need to be implemented by different hardware units. Precisely, as described above, various units may be combined into a coder-decoder hardware unit, or may be provided by a set of interoperable hardware units (including one or more processors described above) in combination with appropriate software and/or firmware.

It should be understood that "one embodiment" or "an embodiment" mentioned throughout this specification means that particular features, structures, or characteristics related to the embodiment are included in at least one embodiment of the present invention. Therefore, "in one embodiment" or "in an embodiment" appearing throughout this specification unnecessarily means a same embodiment. In addition, these particular features, structures, or characteristics may be combined in one or more embodiments in any appropriate manner.

It should be understood that sequence numbers of the foregoing processes do not mean execution sequences in various embodiments of the present invention. The execution sequences of the processes should be determined based on functions and internal logic of the processes, and should not be construed as any limitation on the implementation processes of the embodiments of the present invention.

In addition, the terms "system" and "network" in this specification may be used interchangeably in this specification. It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that in the embodiments of this application, "B corresponding to A" indicates that B is associated with A, and B may be determined based on A. However, it should further be understood that determining B based on A does not mean that B is determined based on A only; in other words, B may alternatively be determined based on A and/or other information. A person of ordinary skill in the art may be aware that, in combination with the examples described in the embodiments disclosed in this specification, units and algorithm steps can be implemented by electronic hardware, computer software, or a combination thereof. To clearly describe the interchangeability between hardware and software, the foregoing has generally described compositions and steps of the examples based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing described system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of the embodiments.

In addition, the function units in the embodiments of the present invention may be integrated into one processing unit, or each of the units may exist alone physically, or two or more units may be integrated into one unit.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  An information transmission method, wherein the method is used in a multiuser superposition transmission (MUST) system, and comprises:

    sending, by a base station, an indication message to a terminal, wherein the indication message indicates power information for transmitting a data signal by the base station to the terminal, or the indication message indicates a quantity of interference space layers, and the quantity of interference space layers is corresponding to the data signal transmitted by the base station to the terminal; and
    sending, by the base station, the data signal to the terminal.

2.  The method according to claim 1, wherein the indication message comprises a first field, and the first field is used to indicate the power information for transmitting the data signal by the base station to the terminal, or the first field is used to indicate a MUST interference existence status and a power ratio when the base station transmits the data signal to the terminal at a corresponding space layer.

3.  The method according to claim 2, wherein when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

4.  The method according to claim 2, wherein when the base station transmits the data signal to the terminal in a single-space-layer transmission mode, the first field is used to indicate the power information for transmitting the data signal by the base station to the terminal; or
    when the base station transmits the data signal to the terminal in a two-space-layer transmission mode, the first field is used to indicate the MUST interference existence status and the power ratio at the corresponding space layer.

5.  The method according to claim 1, wherein the indication message comprises a first field and a second field, wherein the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

**6.** The method according to any one of claims 1 to 5, wherein the power information comprises a power offset amount, or comprises whether power offset is performed and a power offset amount, and the power offset amount is 0 or a preset value.

**7.** The method according to claim 5, comprising:

when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or
when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

**8.** An information transmission method, wherein the method is used in a multiuser superposition transmission (MUST) system, and comprises:

receiving, by a terminal, an indication message sent by a base station, wherein the indication message indicates power information for transmitting a data signal by the base station to the terminal, or the indication message indicates a quantity of interference space layers, and the quantity of interference space layers is corresponding to the data signal transmitted by the base station to the terminal;
calculating, based on the indication message, a power for receiving the data signal; and
receiving, based on the calculated power, the data information sent by the base station.

**9.** The method according to claim 8, wherein the indication message comprises a first field, and the first field is used to indicate the power information for transmitting the data signal by the base station to the terminal, or the first field is used to indicate a MUST interference existence status and a power ratio when the base station transmits the data signal to the terminal at a corresponding space layer.

**10.** The method according to claim 9, wherein when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

**11.** The method according to claim 9, wherein when the base station transmits the data signal to the terminal in a single-space-layer transmission mode, the first field is used to indicate the power information for transmitting the data signal by the base station to the terminal; or
when the base station transmits the data signal to the terminal in a two-space-layer transmission mode, the first field is used to indicate the MUST interference existence status and the power ratio at the corresponding space layer.

**12.** The method according to claim 8, wherein the indication message comprises a first field and a second field, wherein the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

**13.** The method according to any one of claims 8 to 12, wherein the power information comprises a power offset amount, or comprises whether power offset is performed and a power offset amount, and the power offset amount is 0 or a preset value.

**14.** The method according to claim 12, comprising:

when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

15. Abase station, wherein the base station is used in a MUST system, and comprises:

a first sending unit, configured to send an indication message to a terminal, wherein the indication message indicates power information for transmitting a data signal by the base station to the terminal, or the indication message indicates a quantity of interference space layers, and the quantity of interference space layers is corresponding to the data signal transmitted by the base station to the terminal; and

a second sending unit, configured to send the data signal to the terminal.

16. The base station according to claim 15, wherein the indication message comprises a first field, and the first field is used to indicate the power information for transmitting the data signal by the base station to the terminal, or the first field is used to indicate a MUST interference existence status and a power ratio when the base station transmits the data signal to the terminal at a corresponding space layer.

17. The base station according to claim 16, wherein
when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

18. The base station according to claim 16, wherein
when the base station transmits the data signal to the terminal in a single-space-layer transmission mode, the first field is used to indicate the power information for transmitting the data signal by the base station to the terminal; or when the base station transmits the data signal to the terminal in a two-space-layer transmission mode, the first field is used to indicate the MUST interference existence status and the power ratio at the corresponding space layer.

19. The base station according to claim 14, wherein
the indication message comprises a first field and a second field, wherein the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

20. The base station according to any one of claims 14 to 19, wherein the power information comprises a power offset amount, or comprises whether power offset is performed and a power offset amount, and the power offset amount is 0 or a preset value.

21. The method according to claim 19, comprising:

when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or

when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

22. Abase station, wherein the base station is used in a MUST system, and comprises:

a transceiver and a processor, wherein

the processor is configured to control the transceiver to send/receive information; and

the transceiver is configured to: send an indication message to a terminal, wherein the indication message indicates power information for transmitting a data signal by the base station to the terminal, or the indication message indicates a quantity of interference space layers, and the quantity of interference space layers is corresponding to the data signal transmitted by the base station to the terminal; and send the data signal to the terminal.

23. The base station according to claim 22, wherein the indication message comprises a first field, and the first field is used to indicate the power information for transmitting the data signal by the base station to the terminal, or the first field is used to indicate a MUST interference existence status and a power ratio when the base station transmits the data signal to the terminal at a corresponding space layer.

24. The base station according to claim 18, wherein when a transport block corresponding to the first field is not activated, the first field is used to indicate the power information for transmitting the data by the base station to the terminal; or when a transport block corresponding to the first field is activated, the first field is used to indicate the MUST interference existence status and the power ratio when the base station transmits the data to the terminal at the corresponding space layer.

25. The base station according to claim 18, wherein
when the base station transmits the data signal to the terminal in a single-space-layer transmission mode, the first field is used to indicate the power information for transmitting the data signal by the base station to the terminal; or when the base station transmits the data signal to the terminal in a two-space-layer transmission mode, the first field is used to indicate the MUST interference existence status and the power ratio at the corresponding space layer.

26. The base station according to claim 17, wherein
the indication message comprises a first field and a second field, wherein the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

27. The base station according to any one of claims 17 to 21, wherein the power information comprises a power offset amount, or comprises whether power offset is performed and a power offset amount, and the power offset amount is 0 or a preset value.

28. The base station according to claim 21, comprising:

when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or
when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

29. A terminal, wherein the terminal is used in a MUST system, and comprises:

a first receiving unit, configured to receive an indication message sent by a base station, wherein the indication message indicates power information for transmitting a data signal by the base station to the terminal, or the indication message indicates a quantity of interference space layers, and the quantity of interference space layers is corresponding to the data signal transmitted by the base station to the terminal;
a calculation unit, configured to calculate, based on the indication message, a power for receiving the data signal; and
a second receiving unit, configured to receive, based on the calculated power, the data signal sent by the base station.

30. The terminal according to claim 29, wherein the indication message comprises a first field, and the first field is used to indicate the power information for transmitting the data signal by the base station to the terminal, or the first field is used to indicate a MUST interference existence status and a power ratio when the base station transmits the data signal to the terminal at a corresponding space layer.

31. The method according to claim 30, wherein when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

32. The method according to claim 30, wherein when the base station transmits the data signal to the terminal in a single-space-layer transmission mode, the first field is used to indicate the power information for transmitting the data signal by the base station to the terminal; or
when the base station transmits the data signal to the terminal in a two-space-layer transmission mode, the first field is used to indicate the MUST interference existence status and the power ratio at the corresponding space layer.

33. The method according to claim 29, wherein the indication message comprises a first field and a second field, wherein the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

34. The method according to any one of claims 29 to 33, wherein the power information comprises a power offset amount, or comprises whether power offset is performed and a power offset amount, and the power offset amount is 0 or a preset value.

35. The method according to claim 33, comprising:

when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or
when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

36. A terminal, wherein the terminal is used in a MUST system, and comprises:

a processor and a transceiver, wherein
the transceiver is configured to receive an indication message sent by a base station, wherein the indication message indicates power information for transmitting a data signal by the base station to the terminal, or the indication message indicates a quantity of interference space layers, and the quantity of interference space layers is corresponding to the data signal transmitted by the base station to the terminal;
the processor is configured to calculate, based on the indication message, a power for receiving the data signal; and
the transceiver is further configured to receive, based on the calculated power, the data signal sent by the base station.

37. The terminal according to claim 36, wherein the indication message comprises a first field, and the first field is used to indicate the power information for transmitting the data signal by the base station to the terminal, or the first field is used to indicate a MUST interference existence status and a power ratio when the base station transmits the data signal to the terminal at a corresponding space layer.

38. The terminal according to claim 37, wherein when a transport block corresponding to the first field is not activated, the first field is used to indicate the power information for transmitting the data signal by the base station to the terminal; or when a transport block corresponding to the first field is activated, the first field is used to indicate the MUST interference existence status and the power ratio when the base station transmits the data signal to the terminal at the corresponding space layer.

39. The terminal according to claim 37, wherein when the base station transmits the data signal to the terminal in a single-space-layer transmission mode, the first field is used to indicate the power information for transmitting the data signal by the base station to the terminal; or
when the base station transmits the data signal to the terminal in a two-space-layer transmission mode, the first field is used to indicate the MUST interference existence status and the power ratio at the corresponding space layer.

40. The terminal according to claim 36, wherein the indication message comprises a first field and a second field, wherein the first field is used to indicate a MUST interference existence status and a power ratio at the space layer, and the second field is used to indicate the power information for transmitting the data information by the base station to the terminal; or the second field is used to indicate a MUST interference existence status and a power ratio at the space layer, and the first field is used to indicate the power information for transmitting the data information by the base station to the terminal.

41. The terminal according to any one of claims 36 to 40, wherein the power information comprises a power offset amount, or comprises whether power offset is performed and a power offset amount, and the power offset amount is 0 or a preset value.

42. The terminal according to claim 40, comprising:

when the first field is used to indicate the MUST interference existence status and the power ratio at the space layer and the first field indicates that no MUST interference exists at the space layer, the second field indicates that no power offset exists or a power offset amount is 0 when the base station transmits the data signal to the terminal, or the second field is an invalid field; or
when the second field is used to indicate the MUST interference existence status and the power ratio at the space layer and the second field indicates that no MUST interference exists at the space layer, the second field indicates that no power offset exists or a power offset amount is 0 when the base station transmits the data signal to the terminal, or the second field is invalid.

FIG. 1

| A base station sends an indication message to a terminal | S201 |
| --- | --- |

| The base station sends a data signal to the terminal | S202 |
| --- | --- |

FIG. 2

```
                                                                        ┌── S301
┌──────────────────────────────────────────────────────┐ ╱
│                                                        │╱
│   A terminal receives an indication message sent by a base station   │
│                                                        │
└──────────────────────────────────────────────────────┘
                            │
                            ▼
                                                                        ┌── S302
┌──────────────────────────────────────────────────────┐ ╱
│   Calculate, based on the indication message, a power for            │╱
│              receiving a data signal                   │
└──────────────────────────────────────────────────────┘
                            │
                            ▼
                                                                        ┌── S303
┌──────────────────────────────────────────────────────┐ ╱
│   Receive, based on the calculated power, the data signal sent by    │╱
│                   the base station                     │
└──────────────────────────────────────────────────────┘
```

FIG. 3

```
┌──────────────────────────────────────────────────────┐
│                     Base station                       │
│                                                        │
│          ┌── 100                     ┌── 200           │
│        ╱                           ╱                   │
│   ┌─────────────────┐        ┌─────────────────────┐   │
│   │ First sending unit │────│ Second sending unit  │   │
│   └─────────────────┘        └─────────────────────┘   │
│                                                        │
└──────────────────────────────────────────────────────┘
```

FIG. 4

Base station

110                                    120

| Processor | | Transceiver |

FIG. 5

Terminal

300                          400                          500

| First receiving unit | | Calculation unit | | Second receiving unit |

FIG. 6

Terminal

210                                    220

| Processor | | Transceiver |

FIG. 7

# INTERNATIONAL SEARCH REPORT

| International application No. |
| --- |
| PCT/CN2016/107166 |

## A. CLASSIFICATION OF SUBJECT MATTER

H04W 52/14 (2009.01) i

According to International Patent Classification (IPC) or to both national classification and IPC

## B. FIELDS SEARCHED

Minimum documentation searched (classification system followed by classification symbols)

H04W, H04L, H04Q, H04B

Documentation searched other than minimum documentation to the extent that such documents are included in the fields searched

Electronic data base consulted during the international search (name of data base and, where practicable, search terms used)

CPRSABS, VEN, CNKI, CNTXT, USTXT: 多用户, 叠加, 干扰, 基站, 功率, 偏移, multi-user, superpose, transmission, MUST, interfere, base, station, power, shift

## C. DOCUMENTS CONSIDERED TO BE RELEVANT

| Category* | Citation of document, with indication, where appropriate, of the relevant passages | Relevant to claim No. |
| --- | --- | --- |
| X | CN 106162851 A (LONGBO COMMUNICATION TECHNICAL CO., LTD.), 23 November 2016 (23.11.2016), description, paragraphs [0082]-[0101], and figure 1 | 1-42 |
| X | CN 106162691 A (ALCATEL-LUCENT SHANGHAI BELL CO., LTD.), 23 November 2016 (23.11.2016), description, paragraphs [0007]-[0048], and figure 1 | 1-42 |
| A | CN 106034360 A (LONGBO COMMUNICATION TECHNICAL CO., LTD.), 19 October 2016 (19.10.2016), entire document | 1-42 |
| A | CN 104412674 A (TELEFONAKTIEBOLAGET L M ERICSSON), 11 March 2015 (11.03.2015), entire document | 1-42 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 June 2017 | 17 August 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer TANG, Mingming Telephone No. (86-10) 62411353 |
| --- | --- |

Form PCT/ISA/210 (second sheet) (July 2009)

## INTERNATIONAL SEARCH REPORT
### Information on patent family members

| | International application No. |
|---|---|
| | PCT/CN2016/107166 |

| Patent Documents referred in the Report | Publication Date | Patent Family | Publication Date |
|---|---|---|---|
| CN 106162851 A | 23 November 2016 | WO 2016155507 A1 | 06 October 2016 |
| CN 106162691 A | 23 November 2016 | None | |
| CN 106034360 A | 19 October 2016 | WO 2016146073 A1 | 22 September 2016 |
| CN 104412674 A | 11 March 2015 | IN 9406DEN2014 A | 17 July 2015 |
| | | EP 2870806 A1 | 13 May 2015 |
| | | US 2015131572 A1 | 14 May 2015 |
| | | US 9491711 B2 | 08 November 2016 |
| | | WO 2014007712 A1 | 09 January 2014 |

Form PCT/ISA/210 (patent family annex) (July 2009)